**Europäisches Patentamt**

**European Patent Office**

**Office européen des brevets**

(19)

(11) Veröffentlichungsnummer : **0 406 261 B1**

(12) # EUROPÄISCHE PATENTSCHRIFT

(45) Veröffentlichungstag der Patentschrift :
17.06.92 Patentblatt 92/25

(51) Int. Cl.⁵ : **B62D 5/10**, B62D 5/093

(21) Anmeldenummer : 89903133.0

(22) Anmeldetag : 08.03.89

(86) Internationale Anmeldenummer :
**PCT/EP89/00239**

(87) Internationale Veröffentlichungsnummer :
**WO 89/08576 21.09.89 Gazette 89/23**

(54) LENKBARE RADACHSE FÜR EIN KRAFTFAHRZEUG.

(30) Priorität : 12.03.88 DE 3808386

(43) Veröffentlichungstag der Anmeldung :
09.01.91 Patentblatt 91/02

(45) Bekanntmachung des Hinweises auf die
Patenterteilung :
17.06.92 Patentblatt 92/25

(84) Benannte Vertragsstaaten :
DE FR GB IT

(56) Entgegenhaltungen :
WO-A-82/00983
DE-A- 3 414 579
DE-B- 1 655 927
US-A- 2 086 814

(73) Patentinhaber : **ZF FRIEDRICHSHAFEN
Aktiengesellschaft
Löwentaler Strasse 100 Postfach 2520
W-7990 Friedrichshafen 1 (DE)**

(72) Erfinder : **RAUTER, Jürgen
Sandöschstra e 33
W-7990 Friedrichshafen (DE)**
Erfinder : **GAZYAKAN, Ünal
Peoriastra e 32
W-7990 Friedrichshafen (DE)**
Erfinder : **HAUPT, Josef
Motharistra e 5
W-7991 Oberteuringen (DE)**
Erfinder : **BÜRKER, Rainer
Im Hegenried 12
W-7980 Ravensburg 19 (DE)**

**Beschreibung**

Die Erfindung bezieht sich auf eine lenkbare Radachse für ein Kraftfahrzeug, deren starrer Achskörper an endseitigen Achsschenkeln mittels Lenkhebel verschwenkbare Radköpfe aufnimmt, wobei die Lenkhebel über Spurstangen mit einer innerhalb des Achskörpers angeordneten hydrostatischen oder hilfskraftunterstützten Lenkeinrichtung verbunden sind, die einen in Achslängsrichtung in einem vorzugsweise doppeltwirkenden Lenkzylinder verschiebbaren Arbeitskolben aufweist.

Eine lenkbare Radachse der genannten Gattung ist aus der WO-A 82/00983 bekannt. Es handelt sich dabei um eine nicht angetriebene Radachse für einen Gabelstapler, deren starrer Achskörper pendelnd am Fahrgestell aufgehängt ist. Der Achskörper hat, bezogen auf eine vertikale Längsmittelebene der Radachse, eine asymmetrische Form, d. h. er ist einseitig, bauchig ausgebildet. Innerhalb dieses vorstehenden Abschnittes nimmt der Achskörper eine Lenkeinrichtung auf, in deren parallel zur Längsmittelachse der Radachse angeordneten Lenkzylinder ein Arbeitskolben geführt ist, der an seinen Enden jeweils über kurze Spurstangenabschnitte gelenkig verbunden ist mit Lenkhebeln beider Räder. Die vorbekannte Art der Integration der Lenkeinrichtung in den Achskörper hat den Nachteil einer Vergrößerung der baulichen Abmessungen des Achskörpers und somit einer Erhöhung des Gewichts der Radachse, wobei sich das höhere Gewicht einerseits ungünstig für die Gesamtkonzeption des Fahrzeugs und andererseits bei einer eventuellen Federung der Radachse negativ auf deren dynamisches Fahrverhalten auswirkt. Probleme bereitet auch die dargestellte Lenkkinematik, da die kurzen, zwischen den Lenkhebeln und den Arbeitskolbenenden angeordneten Spurstangenabschnitte zu Strecklagen der gelenkig verbundenen Elemente und erheblichen Lenkwinkelfehlern führen können. Schließlich besteht keine Möglichkeit, eine derart ausgebildete Radachse als angetriebene Lenkachse mit einem Differentialgetriebe und von diesem zu den Rädern führenden Antriebswellen auszubilden, da die Lenkeinrichtung zumindest in der im Stand der Technik dargestellten Ausführungsform in den Raum zur Unterbringung des Achsantriebs eingreift.

Weiterhin ist aus der DE-AS 16 55 927 eine hilfskraftunterstützte Lenkeinrichtung für eine lenkbare Radachse bekannt, bei der von einem Lenkgetriebe aus ein Schubgestänge zum Lenkhebel eines Achsschenkels führt. Die beiden Achsschenkeln zugeordneten Lenkhebel sind über eine durchgehende Spurstange miteinander verbunden und durch hydraulische Servozylinder hilfskraftunterstützt. Die Anordnung der Servozylinder in Fahrtrichtung des Fahrzeugs beansprucht viel Platz, und es besteht die Gefahr einer Beschädigung der Servozylinder.

Der Erfindung liegt die Aufgabe zugrunde, eine hydrostatische oder hilfskraftunterstützte Lenkeinrichtung derart an einem starren Achskörper anzuordnen, daß sich das Gewicht und die baulichen Abmessungen der Radachse nur unwesentlich vergrößern. Da Radachsen der vorgenannten Gattung vorzugsweise an Arbeitsfahrzeugen Verwendung finden, soll die Lenkeinrichtung vor Beschädigungen geschützt untergebracht sein.

Diese Aufgabe wird an einer lenkbaren Radachse der in Rede stehenden Gattung nach dem kennzeichnenden Teil des Anspruchs 1 dadurch gelöst, daß der Lenkzylinder koaxial zur Längsmittelachse des Achskörpers angeordnet ist und der Arbeitskolben mit einem aus der radialen Erstreckung des Achskörpers herausragenden Schwenkhebel zusammenwirkt, der mit den Spurstangen gelenkig verbunden ist und eine quer zur Längsmittelachse der Radachse verlaufende Schwenkachse aufweist. Die Lenkeinrichtung ist auf diese Weise mit in die tragende Struktur des Achskörpers einbezogen und beansprucht keinen zusätzlichen Bauraum. Somit werden erhebliche Gewichts- und Kostenvorteile erzielt, und die Antriebsteile der Lenkeinrichtung sind ohne zusätzliche bauliche Maßnahmen sehr wirksam vor Beschädigungen geschützt. Dabei kann die völlig in den Achskörper integrierte aus Lenkzylinder und Arbeitskolben bestehende Einheit entweder Bestandteil einer hydrostatischen Lenkeinrichtung oder einer hilfskraftbetätigten Lenkeinrichtung sein. Bei einer hydrostatischen Lenkeinrichtung überträgt der Arbeitskolben die gesamte Lenkkraft über den Schwenkhebel auf die Spurstangen, während bei einer hilfskraftbetätigten Lenkeinrichtung ein mechanisches Übertragungselement von einem Lenkgetriebe aus auf den Schwenkhebel wirken kann und eine Servounterstützung seitens des Arbeitskolbens auf den Schwenkhebel vorhanden ist.

Weitere erfindungsgemäße Ausgestaltungen sind in den Unteransprüchen 2 bis 9 aufgeführt. Gemäß Anspruch 2 soll der Arbeitskolben an einem Abschnitt seiner Kolbenstange als Zahnstange ausgebildet sein, in die ein mit dem Drehhebel über eine Lenkwelle verbundenes Zahnsegment eingreift. Die Zahnstange versetzt somit in einfacher Weise die Lenkwelle in eine Drehbewegung, welche zu einem Verschwenken des Schwenkhebels führt. Da die Antriebselemente Zahnstange und Zahnsegment geschützt im Achskörper angeordnet sind, besteht keine Beschädigungs- und Verschmutzungsgefahr dieser Elemente. Vorzugsweise kann gemäß Anspruch 3 der als Zahnstange ausgebildete Abschnitt der Kolbenstange geringere radiale Abmessungen aufweisen als der Arbeitskolben, wobei der Abschnitt beispielsweise als Segment ausgeführt sein kann, so daß die Möglichkeit besteht, den Achsabstand zwischen Lenkwelle und Arbeitskolben zu verringern. Darüber hinaus kann dem Anspruch 4 zufolge die Lenkwelle in einem einstückig mit dem Achskörper

EP 0 406 261 B1

ausgebildeten Lagerauge angeordnet sein. Eine derartige Aufnahme für die Anordnung von Zahnsegment, Lenkwelle und Schwenkhebel läßt sich gußtechnisch problemlos gemeinsam mit dem Achskörper ausbilden.

Weiterhin wird gemäß Anspruch 5 vorgeschlagen, bei einer angetriebenen Radachse mit einem über Antriebswellen mit Radtriebsätzen der Radköpfe verbundenes Differential eine der Antriebswellen, die innerhalb des Achskörpers angeordnet sind, durch eine Längsbohrung des Arbeitskolbens hindurchzuführen. Auf diese Weise ist es gelungen, nicht nur eine kompakte Bauweise des tragenden Achskörpers und der Lenkeinrichtung zu erzielen, sondern zusätzlich noch die Antriebselemente der angetriebenen Radachse mit in dieses System einzubeziehen. In vorteilhafter Weise läßt sich dabei gemäß Anspruch 6 die Längsbohrung koaxial zur Kolbenachse anordnen, so daß die Antriebswelle den Arbeitskolben zentrisch durchdringt.

Eine günstige Abdichtung der Arbeitsräume des Lenkzylinders läßt sich gemäß Anspruch 7 dadurch erzielen, daß der Arbeitskolben an seiner Längsbohrung dichtend geführt ist auf einem die Antriebswelle umhüllenden Innenrohr. An diesem im Achskörper festgelegten Innenrohr ist während des gesamten Hubes des Arbeitskolbens eine ausreichende Abdichtung der Arbeitsräume des Lenkzylinders möglich. In weiterer Ausgestaltung der Erfindung kann dem Anspruch 8 zufolge der Achskörper aus einem Differentialgehäuse mit zumindest einem an dieses angeflanschten Achsrohr bestehen, wobei das Innenrohr an seinem dem Differentialgehäuse benachbarten Ende gegenüber dem Achsrohr oder dem Differentialgehäuse mittels eines Zwischenflansches und an seinem dem Differentialgehäuse abgewandten Ende mittels eines Stützsteges des Achsrohres lagefixiert ist. Auf diese Weise ergeben sich günstige Montage- und Demontagemöglichkeiten für die Lenkeinrichtung. Das Innenrohr und der Arbeitskolben können problemlos in das vom Differentialgehäuse abgeflanschte Achsrohr eingesetzt werden. Der Stützsteg und der Zwischenflansch dienen neben der Lagefixierung des Innenrohres als Abschlußdeckel der beiden Arbeitsräume des Lenkzylinders (Anspruch 10). Gemäß Anspruch 9 kann der Zwischenflansch darüber hinaus zur Lagerung des Differentialgetriebes und/oder der Antriebswelle dienen. Der Zwischenflansch erfüllt somit in vorteilhafter Weise gleichzeitig drei Funktionen.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Zur weiteren Erläuterung der Erfindung wird auf die Zeichnung verwiesen, in der ein Ausführungsbeispiel dargestellt ist. Es zeigen:

Fig. 1 eine Draufsicht einer erfindungsgemäßen Radachse mit einer in den Achskörper integrierten Lenkeinrichtung, aus der im wesentlichen der generelle Aufbau der Radachse und deren Lenkkinematik hervorgeht,

Fig. 2 einen mittleren Ausschnitt aus einer erfindungsgemäßen Radachse mit einem Teillängsschnitt durch ein Achsrohr und eine darin angeordnete Lenkeinrichtung und

Fig. 3 einen Querschnitt gemäß Linie III-III in Fig. 2 durch das Achsrohr und die Lenkeinrichtung.

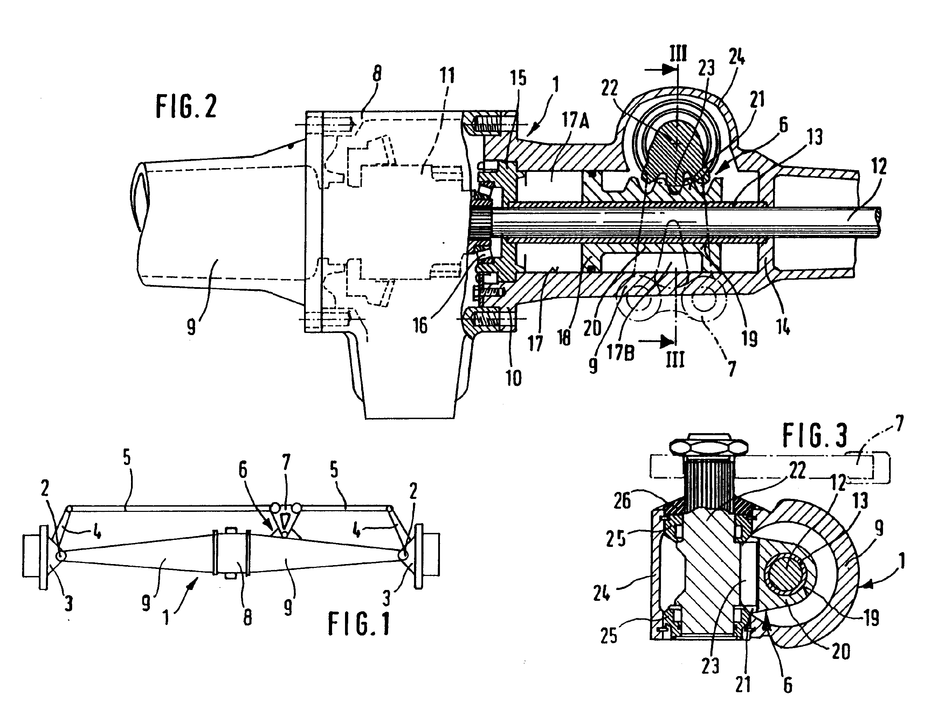

In der Fig. 1 ist mit 1 ein starrer Achskörper einer lenkbaren Radachse bezeichnet, an dessen endseitigen Achsschenkeln 2 Radköpfe 3 verschwenkbar angeordnet sind. An diesen Radköpfen 3 sind nicht dargestellte Räder des Fahrzeugs befestigt. Das Verschwenken der Radköpfe 3 erfolgt jeweils über einen Lenkhebel 4 und Spurstangen 5 von einer Lenkeinrichtung 6 aus, von der in der Fig. 1 nur ein Schwenkhebel 7 dargestellt ist. Der Achskörper 1 ist dreiteilig ausgebildet, d. h., er besteht aus einem mittigen Differentialgehäuse 8 und Achsrohren 9.

In der Fig. 2, die einen Teillängsschnitt durch eines der Achsrohre 9 und das Differentialgehäuse 8 sowie die Lenkeinrichtung 6 darstellt, ist zu entnehmen, daß das Achsrohr 9 über einen Flansch 10 mit dem Differentialgehäuse 8 verschraubt ist. Im Inneren des Differentialgehaüses 8 ist ein Differentialgetriebe 11 angeordnet, das über eine nicht dargestellte Hauptantriebswelle vom Fahrzeuggetriebe aus angetrieben wird. Vom Differentialgetriebe 11 aus führen jeweils Antriebswellen 12 zu den Radköpfen 3 der Radachse. Sie treiben dort unmittelbar oder über Reduktionsgetriebe die nicht dargestellten Radsätze an.

Die Antriebswelle 12 ist dabei in einem Bereich, in welchem die Lenkeinrichtung 6 am Achsrohr 9 angeordnet ist, von einem Innenrohr 13 umgeben, das an einem Ende in einem Stützsteg 14 des Achsrohres 9 und am anderen Ende in einem Zwischenflansch 15 befestigt ist. Der Zwischenflansch 15 dient dabei gleichzeitig mittels eines Wälzlagers 16 zur Lagerung des Differentialgetriebes 11.

Die Lenkeinrichtung 6 weist einen Lenkzylinder 17 auf, der unmittelbar durch die bearbeitete zylindrische Innenwand des Achsrohres 9 gebildet wird. In diesem Lenkzylinder 17 ist ein Arbeitskolben 18 verschiebbar geführt und bildet dabei innerhalb des Lenkzylinders 17 Arbeitsräume 17A und 17B. Der Arbeitskolben weist weiterhin eine koaxial verlaufende Längsbohrung 19 auf, durch die das Innenrohr 13 mitsamt der Antriebswelle 12 hindurchgeführt ist. An den Arbeitskolben 18 schließt sich eine Kolbenstange 20 an, die abschnittsweise als Zahnstange 21 ausgebildet ist, wobei in diese Zahnstange 21 ein mit einer Lenkwelle 22 verbundenes Zahnsegment eingreift. Eine Längsbewegung des Arbeitskolbens 18 innerhalb des Lenkzylinders 17 bewirkt aufgrund des Zahneingriffs ein Verschwenken des Zahnsegments 23 und somit eine Drehbewegung der

3

Lenkwelle 22.

Wie insbesondere aus der Fig. 3 hervorgeht, ist die quer zur Antriebswelle 12 und zum Arbeitskolben 18 verlaufende Lenkwelle 22 in einem einstückig mit dem Achsrohr 9 ausgebildeten Lagerauge 24 über Lagerschilde 25 drehbar angeordnet. Ein oberer Lagerschild 25 ist dabei mittels einer Staubkappe 26, die das Eindringen von Schmutz in das Innere des Lagerauges 24 verhindern soll, abgedeckt. Die Lenkwelle nimmt an ihrem sich aus dem Lagerauge erstreckenden Ende den bereits in Fig. 1 dargestellten Schwenkhebel 7 auf, der an seinem Ende gelenkig verbunden ist mit den Spurstangen 5, die ihrerseits wiederum angelenkt sind an den Lenkhebeln 4 der Radköpfe 3.

Wie den Fig. 2 und 3 entnommen werden kann, ist die Lenkeinrichtung 6 völlig in den Achskörper 1 integriert, so daß ein günstiger Schutz vor Beschädigung der Lenkeinrichtung 6 und verringerte bauliche Abmessungen der Lenkachse erzielbar sind. Dabei entfällt ein separater Lenkzylinder durch die Verwendung des Achsrohres 9 als Lenkzylinder 17. Die erfindungsgemäße Integration der Lenkeinrichtung 6 in den Achskörper 1 ist darüber hinaus verwendbar an allen lenkbaren Radachsen mit starrem Achskörper 1, wobei über den Schwenkhebel 7 Lenkwinkelkorrekturen und -anpassungen möglich sind. Bei der in den Fig. 2 und 3 dargestellten Ausführungsform der Erfindung ist eine einstückige Ausbildung des Lagerauges 24 mit dem Achsrohr 9 vorgesehen, es kann dieses Lagerauge 24 aber auch als separates Element ausgebildet sein, das mit dem Achsrohr 9 verschraubt wird, wobei bei einer Anordnung identisch ausgebildeter Achsrohre 9 beidseitig des Differentialgehäuses eine entsprechende Öffnung des Achsrohres ohne Lenkeinrichtung verschlossen werden kann. Dadurch ergibt sich eine Mehrfachverwendung gleicher Bauteile mit dem Ergebnis einer Kostenreduzierung.

Bezugszeichen

1 Achskörper
2 Achsschenkel
3 Radköpfe
4 Lenkhebel
5 Spurstangen
6 Lenkeinrichtung
7 Schwenkhebel
8 Differentialgehäuse
9 Achsrohr
10 Flansch
11 Differentialgetriebe
12 Antriebswelle
13 Innenrohr
14 Stützsteg
15 Zwischenflansch
16 Wälzlager
17 Lenkzylinder
17A Arbeitsraum
17B Arbeitsraum
18 Arbeitskolben
19 Längsbohrung
20 Kolbenstange
21 Zahnstange
22 Lenkwelle
23 Zahnsegment
24 Lagerauge
25 Lagerschild
26 Staubkappe

**Patentansprüche**

1. Lenkbare Radachse für ein Kraftfahrzeug, deren starrer Achskörper (1) an endseitigen Achsschenkeln (2) mittels Lenkhebel (4) verschwenkbare Radköpfe (3) aufnimmt, wobei die Lenkhebel (4) über Spurstangen (5) mit einer innerhalb des Achskörpers (1) angeordneten hydrostatischen oder hilfskraftunterstützten Lenkeinrichtung (6) verbunden sind, die einen in Achslängsrichtung in einem vorzugsweise doppeltwirkenden Lenkzylinder (17) verschiebbaren Arbeitskolben (18) aufweist, dadurch **gekennzeichnet**, daß der Lenkzylinder (17) koaxial zur Längsmittelachse des Achskörpers angeordnet ist und der Arbeitskolben (18) mit einem aus der radialen Erstreckung des Achskörpers (1) vorstehenden Schwenkhebel (7) zusammenwirkt, der mit den Spurstangen gelenkig verbunden ist und eine quer zur Längsmittelachse der Radachse verlaufende Schwenkachse aufweist.

2. Lenkbare Radachse nach Anspruch 1, dadurch **gekennzeichnet**, daß der Arbeitskolben (18) an einem beschnitt seiner Kolbenstange (20) als Zahnstange (21) ausgebildet ist, in die ein mit dem Schwenkhebel (7) über eine Lenkwelle (22) verbundenes zahnsegment (23) eingreift.

3. Lenkbare Radachse nach einem der Ansprüche 1 oder 2, dadurch **gekennzeichnet**, daß zumindest der als Zahnstange (21) ausgebildete beschnitt der Kolbenstange geringere radiale Abmessungen als der Arbeitskolben (18) aufweist.

4. Lenkbare Radachse nach Anspruch 2, dadurch **gekennzeichnet**, daß die Lenkwelle (22) in einem einstückig mit dem Achskörper (1) ausgebildeten Lagerauge (24) angeordnet ist.

5. Lenkbare Radachse nach einem der Ansprüche 1 bis 4 dadurch **gekennzeichnet**, daß die Radachse ein über Antriebswellen (12) mit Radtriebsätzen der Radköpfe (3) verbundenes Differentialgetriebe (11) aufweist, wobei die innerhalb eines Achskörpers angeordnete Antriebswelle (12) durch eine Längsbohrung (19) des Arbeitskolbens (18) hindurchgeführt ist.

6. Lenkbare Radachse nach Anspruch 5, dadurch **gekennzeichnet**, daß die Längsbohrung (19) koaxial zur Achse des Arbeitskolbens (18) verläuft.

7. Lenkbare Radachse nach einem der Ansprüche 5 oder 6, dadurch **gekennzeichnet**, daß der Arbeitskolben (18) an seiner Längsbohrung (19) dichtend geführt ist auf einem die Antriebswelle (12) umhüllenden Innenrohr (13).

8. Lenkbare Radachse nach Anspruch 7, dadurch **gekennzeichnet**, daß der Achskörper (1) aus einem Differentialgehäuse (8) mit zumindest einem an dieses angeflanschten Achsrohr besteht, daß das Innenrohr (13) an seinem dem Differentialgehäuse (8) benachbarten Ende gegenüber dem Achsrohr (9) oder dem Differentialgehäuse (8) mittels eines zwischenflansches (15) und an seinem dem Differentialgehäuse (8) abgewandten Ende mittels eines Stützsteges (14) des Achsrohres (9) lagefixiert ist.

9. Lenkbare Radachse nach Anspruch 8, dadurch **gekennzeichnet**, daß der Zwischenflansch (15) zur Lagerung (Wälzlager 16) des Differentialgetriebes (11) und/oder der Antriebswelle (12) dient.

10. Lenkbare Radachse nach einem der Ansprüche 8 oder 9, dadurch geknnzeichnet, daß der Zwischenflansch (15) und der Stützsteg als die Arbeitsräume (17A und 17B) des Lenkzylinders (17) axial verschließende Deckel dienen.

## Claims

1. A steerable wheel axle for a motor vehicle, whose rigid axle body (1) receives wheel heads (3) on end-face stub axles (2), the wheel heads (3) being pivotable by means of steering levers (4) connected via track rods (5) with a hydrostatic or power-assisted steering device (6), which is arranged inside the axle body (1) and comprises a working piston (18) displaceable in the longitudinal direction of the axle in a preferably double-action steering cylinder (17), characterised in that the steering cylinder (17) is arranged coaxial to the longitudinal central axis of the axle body and the working piston (18) cooperates with a pivot lever (7), which projects beyond the radial extension of the axle body (1), is articulatedly connected with the track rods and comprises a pivot axis extending transverse to the longitudinal central axis of the wheel axle.

2. A steerable wheel axle according to claim 1, characterised in that the working piston (18) is designed in one section of its piston rod (20) as a toothed rack (21), in which a tooth segment (23) connected with the pivot lever (7) via a steering shaft (22) engages.

3. A steerable wheel axle according to one of claims 1 or 2, characterised in that at least the section of the piston rod designed as a toothed rack (21) has smaller radial dimensions than the working piston (18).

4. A steerable wheel axle according to claim 2, characterised in that the steering shaft (22) is arranged in a bearing eye (24) integrally formed with the axle body (1).

5. A steerable wheel axle according to one of claims 1 to 4, characterised in that the wheel axle comprises a differential gearing (11) connected via drive shafts (12) with wheel drive assemblies of the wheel heads (3), the drive shaft (12) arranged inside an axle body being guided through a longitudinal bore (19) in the working piston (18).

6. A steerable wheel axle according to claim 5, characterised in that the longitudinal bore (19) extends coaxial to the axis of the working piston (18).

5

7. A steerable wheel axle according to one of claims 5 or 6, characterised in that the working piston (18) is guided in a sealing-tight manner with its longitudinal bore (19) on an inner tube (13) enclosing the drive shaft (12).

8. A steerable wheel axle according to claim 7, characterised in that the axle body (1) is formed by a differential housing (8) with at least one axle tube flanged onto said housing, the inner tube (13) at its end adjacent the differential housing (8) is fixed in place relative to the axle tube (9) or the differential housing (8) by means of an intermediate flange (15) and at its end remote from the differential housing (8) by means of a supporting web (14) of the axle tube (9).

9. A steerable wheel axle according to claim 8, characterised in that the intermediate flange (15) is used for mounting (roller bearing 16) the differential gearing (11) and/or the drive shaft (12).

10. A steerable wheel axle according to one of claims 8 or 9, characterised in that the intermediate flange (15) and the supporting web act as lids axially sealing the operating chambers (17A and 17B) of the steering cylinder (17).

## Revendications

1. Essieu directeur pour véhicule à moteur, avant un pont rigide (1) qui porte à ses extrémités, sur des porte-fusée (2), des têtes de roues (3) orientables au moyen de leviers de commande (4), lesdits leviers (4) étant reliés par des barres de connexion (5) à un dispositif de direction hydrostatique ou assisté (6), disposé à l'intérieur du pont (1) et pourvu d'un piston de travail (18) susceptible de coulisser dans la direction longitudinale de l'essieu dans un vérin de direction (17) de préférence à double effet, **caractérisé** en ce que le vérin de direction (17) est disposé coaxialement à l'axe longitudinal du pont et en ce que le piston de travail (18) coopère avec un levier pivotant (7) dépassant l'extension radiale du pont (1) et relié aux barres de connexion par des articulations, l'axe de pivotement de ce levier ayant une direction perpendiculaire à l'axe longitudinal de l'essieu.

2. Essieu directeur selon la revendication 1, **caractérisé** en ce que le piston de travail (18) est agencé, sur un tronçon de sa tige de piston (20), en crémaillère (21) dans laquelle est engagé un secteur denté (23) raccordé au levier pivotant (7) par un arbre de direction (22).

3. Essieu directeur selon la revendication 1 ou 2, **caractérisé** en ce qu'au moins le tronçon de tige de piston agencé en crémaillère (21) présente des dimensions radiales inférieures à celles du piston de travail (18).

4. Essieu directeur selon la revendication 2, **caractérisé** en ce que l'arbre de direction (22) est monté dans un corps de palier (24) intégré au corps du pont (1).

5. Essieu directeur selon l'une des revendications 1 à 4, **caractérisé** en ce que l'essieu comporte un différentiel (11) relié par des demi-arbres (12) à des trains d'entraînement des têtes de roues (3), l'un des demi-arbres (12), disposé à l'intérieur d'un corps d'essieu, passant à travers un alésage longitudinal (19) du piston de travail (18).

6. Essieu directeur selon la revendication 5, **caractérisé** en ce que ledit alésage longitudinal (19) est coaxial par rapport au piston de travail (18).

7. Essieu directeur selon la revendication 5 ou 6, **caractérisé** en ce que l'alésage longitudinal (19) du piston de travail (18) coulisse d'une manière étanche sur un tube intérieur (13) entourant le demi-arbre (12).

8. Essieu directeur selon la revendication 7, **caractérisé** en ce que le pont (1) comprend un carter de différentiel (8) et au moins un tube de pont fixé au différentiel et en ce que le tube intérieur (13), à son extrémité voisine du carter de différentiel (8), est fixé par rapport au tube de pont (9) ou au carter de différentiel (8) au moyen d'un flasque intermédiaire (15) et, à son extrémité opposée au carter de différentiel (8), est fixé au moyen d'une entretoise (14) du tube de pont (9).

9. Essieu directeur selon la revendication 8, **caractérisé** en ce que le flasque intermédiaire (15) sert de support de palier (roulement 16) du différentiel (11) et/ou du demi-arbre (12).

10. Essieu directeur selon la revendication 8 ou 9, **caractérisé** en ce que le flasque intermédiaire (15) et l'entretoise servent de couvercles fermant axialement les chambres de travail (17A et 17B) du vérin de direction (17).

FIG.3

FIG.2

FIG.1